## Europäisches Patentamt
## European Patent Office
## Office européen des brevets

(19)

(11) Veröffentlichungsnummer: **0 186 726**
**B1**

(12) # EUROPÄISCHE PATENTSCHRIFT

(45) Veröffentlichungstag der Patentschrift:
**12.07.89**

(51) Int. Cl.⁴: **B 23 Q 3/157,** B 23 C 1/00

(21) Anmeldenummer: **85104015.4**

(22) Anmeldetag: **03.04.85**

(54) **Werkzeugmagazin.**

(30) Priorität: **28.12.84 DE 3447706**

(43) Veröffentlichungstag der Anmeldung:
**09.07.86 Patentblatt 86/28**

(45) Bekanntmachung des Hinweises auf die Patenterteilung:
**12.07.89 Patentblatt 89/28**

(84) Benannte Vertragsstaaten:
**CH DE FR GB IT LI**

(56) Entgegenhaltungen:
**DD-A-78 469**
**DE-A-2 354 446**
**DE-B-1 920 275**
**FR-A-2 529 127**
**FR-A-2 547 230**
**US-A-4 122 597**

(73) Patentinhaber: **MAHO Aktiengesellschaft, Postfach 1280 Tiroler Strasse 85, D-8962 Pfronten (DE)**

(72) Erfinder: **Babel, Werner, Achweg 19, D-8962 Pfronten- Meilingen (DE)**

(74) Vertreter: **Patentanwälte Beetz sen. - Beetz jun. Timpe - Siegfried - Schmitt- Fumian, Steinsdorfstrasse 10, D-8000 München 22 (DE)**

## Beschreibung

Die Erfindung betrifft eine Werkzeugmaschine für insbesondere Fräs- und Bohrarbeiten der im Oberbegriff des Patentanspruchs 1 angegebenen Gattung.

Es ist bereits ein Werkzeugmagazin bekannt (Prospekt der Firma "KIWA" Maxcenter-2M), bei dem der eine Reihe von Werkzeugaufnahmen aufweisende Werkzeugträger an einer zusammen mit dem Werkstücktisch verfahrbaren Säule befestigt ist. Aus einer seitlichen Ruheposition kann der Träger um die Längsachse der Säule schwenken und mit seinen Werkzeugaufnahmen in die Wechselposition vor die Werkzeugspindel gebracht werden. Der in der Ruheposition seitlich neben dem Werkstück befindliche Werkzeugträger nimmt jedoch einen beträchtlichen Raum ein und vermindert den freien seitlichen Zugriffsbereich zum Werkstück während der Bearbeitung. Darüber hinaus können bei größeren aufgespannten Werkstücken Werkzeugwechsel nicht vorgenommen werden, da die in die Wechselposition schwenkenden Werkzeuge mit dem Werkstück kollidieren.

Aus der DE-AS-1 920 275 ist eine Werkzeugmaschine mit Werkzeug-Wechseleinrichtung der angegebenen Gattung bekannt, bei welcher ein Satz nebeneinander angeordneter und von getrennten Spindeln angetriebener Werkzeuge gemeinsam durch einen anderen Satz gleichartiger Werkzeuge ersetzt werden kann. Die Werkzeug-Wechseleinrichtung enthält einen Werkzeugträger, der einen ersten Satz von in einer Reihe angeordneten Werkzeugaufnahmen sowie einen gegenüber diesem ersten Satz versetzt angeordneten zweiten Satz von Werkzeugaufnahmen aufweist, wobei beide Sätze von Werkzeugaufnahmen auf einem sich in einer horizontalen Ebene erstreckenden Gestell angeordnet sind. Dieses Gestell ist mit seinem einen Ende seitlich vom Arbeitsbereich auf dem Werkstücktisch angelenkt und wird von einem Motor um eine vertikale Achse aus einer Wechselposition vor den Arbeitsspindeln in eine seitliche Ruheposition - und umgekehrt verschwenkt. Auch bei dieser bekannten Anordnung nimmt der in seiner seitlichen Ruheposition befindliche Werkzeugträger mit den für die verschiedenen Arbeitsgänge notwendigen Werkzeugen einen erheblichen Platz ein. Darüber hinaus müssen die zu bearbeitenden Werkstücke vor jedem Werkzeugwechsel aus dem Arbeitsbereich entfernt werden, um Kollisionen mit dem in den Arbeitsbereich einschwenkenden Werkzeugträger bzw. dessen Werkzeugen zu vermeiden.

Aufgabe der Erfindung ist es, eine Werkzeugmaschine für insbesondere Fräs- und Bohrarbeiten zu schaffen, bei welcher die Werkzeuge auch bei aufgespannten größeren Werkstücken gewechselt werden können, ohne daß der freie Zugriffsbereich zum Werkstück durch die in der Ruheposition befindlichen Werkzeuge beeinträchtigt wird.

Diese Aufgabe wird erfindungsgemäß durch die kennzeichnenden Merkmale des Patentanspruchs 1 gelöst.

Die erfindungsgemäße Anordnung des Werkzeugträgers am Werkstücktisch eröffnet die vorteilhafte Möglichkeit, daß der Werkzeugträger mit den Werkzeugen bei Nichtgebrauch unter die Tischebene seitlich neben oder vor den Werkzeugtisch gebracht werden kann, so daß dadurch der freie allseitige Zugriffsbereich des Werkstücks nicht beeinträchtigt wird. Die Länge der Schwenkarme und die Schwenkwinkel werden zweckmäßig so gewählt, daß die Werkzeugwechsel außerhalb eines Aufspannraumes für die Werkstücke stattfinden.

Eine bevorzugte Ausgestaltung der Erfindung zeichnet sich dadurch aus, daß der Werkzeugträger mit seinen beiden Enden an je einem Schwenkarm befestigt ist, die an den beiden Seitenwänden des Werkstücktisches um eine gemeinsame horizontale Achse schwenkbar angelenkt sind. Damit bildet der Werkzeugträger zusammen mit den beiden Schwenkarmen einen U-förmigen Bügelrahmen, der aus der oberen Wechselstellung in eine Ruheposition schräg unter der vorderen Stirnwand des Werkstücktisches schwenkbar ist, wobei der Werkzeugträger zusammen mit den in seinen Aufnahmen sitzenden Werkzeugen in einem durch eine stirnseitige Klappe verschließbaren Kasten aufgenommen und dadurch gegen Verschmutzungen durch Spülflüssigkeit, Späne u. dgl. geschützt ist.

Damit die Werkzeuge bei aufgeschwenktem Werkzeugträger in die Achse der Horizontalspindel oder der Vertikalspindel ausgerichtet werden können, ist der Werkzeugträger gegenüber den Schwenkarmenden um eine horizontale Achse motorisch schwenkbar, so daß die jeweilige Werkzeugachse in Flucht zur Achse der Horizontalspindel oder der Vertikalspindel gebracht werden kann. Hierzu sind zusätzlich zu der Schwenkbewegung des Werkzeugträgers translatorische Bewegungen des Werktisches und der jeweiligen Werkzeugspindel in drei Achsen notwendig, wobei der eigentliche Werkzeugwechsel nach der Ausrichtung durch eine Vorschubbewegung der Horizontal- bzw. der Vertikalbewegung in ihrer Längsachse erfolgt.

Um beim Einwechseln der Werkzeuge in die Horizontalspindel Kollisionen der Spindel und/oder des Werkstückes mit benachbarten Werkzeugen zu vermeiden, sind die Werkzeugaufnahmen zweckmäßigerweise einzeln um eine horizontale Achse schwenkbar am Werkzeugträger angeordnet.

Um den angestrebten großen Freiraum für die Werkstücke beim Werkzeugwechsel sicherzustellen, zeichnet sich eine zweckmäßige Ausgestaltung der Erfindung dadurch aus, daß der (die) Schwenkarm(e) im Bereich der oberen ständerseitigen Tischkante am Werkstücktisch angelenkt ist (sind). Hierdurch werden große Schwenkarmlängen ermöglicht, die auch eine ausreichend hohe Lage der Werkzeugwechselposition oberhalb der größtmöglichen Werkstücke möglich macht.

Eine weitere Ausgestaltung der Erfindung zeichnet sich dadurch aus, daß ein einziger Schwenkarm an der vorderen Stirnseite des Werkstücktisches um eine horizontale Achse schwenkbar angelenkt ist, so daß sich der unter einem rechten Winkel an ihm befestigte Werkzeugträger zusammen mit den Werkzeugen in der Ruheposition seitlich neben dem Werkstücktisch befinden.

Zur Vergrößerung des Bewegungsbereiches der Schwenkarme und damit des Werkzeugträgers kann schließlich eine Ausführung zweckmäßig sein, bei welcher die Schwenkarme als Gelenkhebelsystem und/oder teleskopisch ausgebildet sind, z. B. durch Zylinder-Kolben-Einheiten gebildet werden. Dies eröffnet die Möglichkeit, von einer kreisförmigen Schwenkbewegung abzugehen und Werkzeugwechsel auch bei aufgespannten übergroßen Werkstücken vornehmen zu können.

Im folgenden werden Ausführungsbeispiele der Erfindung anhand der Zeichnung im einzelnen beschrieben; es zeigen:

Fig. 1 eine Universal-Fräsmaschine mit dem in seine Ruhestellung eingeschwenkten Werkzeugmagazin in schematischer Seitenansicht;

Fig. 2 die Universal-Fräsmaschine nach Fig. 1 während eines Werkzeugwechsels der Horizontalspindel;

Fig. 3 die Universal-Fräsmaschine nach Fig. 1 während eines Werkzeugwechsels der Vertikalspindel;

Fig. 4 vergrößert ein Werkzeugmagazin mit zwei Reihen von Werkzeugaufnahmen und einem Schwenkhebelgestänge;

Fig. 5 die Universal-Fräsmaschine nach Fig. 1 mit einem stirnseitig angelenkten Werkzeugmagazin.

Die dargestellte Universal-Fräsmaschine enthält einen ortsfesten verwindungssteifen Ständer 1 mit oberen Horizontalführungen 2, auf denen ein Spindelstock 3 zusammen mit einem Antriebsmotor längsverfahrbar geführt ist. An der Ständerstirnseite sind vertikale Führungsschienen 4 befestigt, an denen eine Tischkonsole 5 vertikal verfahrbar geführt ist. Diese Tischkonsole 5 trägt einen Werkstücktisch 6, der in - nicht dargestellten - horizontalen Führungen senkrecht zur Zeichenebene verfahren kann. Der Arbeitsbereich der Werkzeuge bzw. der Aufspannbereich der Werkstücke auf dem Werkstücktisch 6 ist durch eine strichpunktierte Umrandung 7 angedeutet.

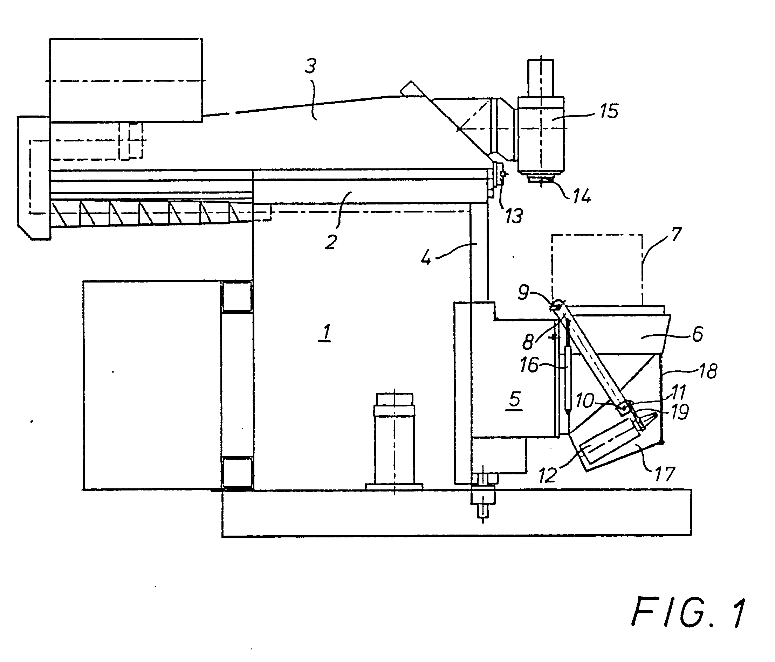

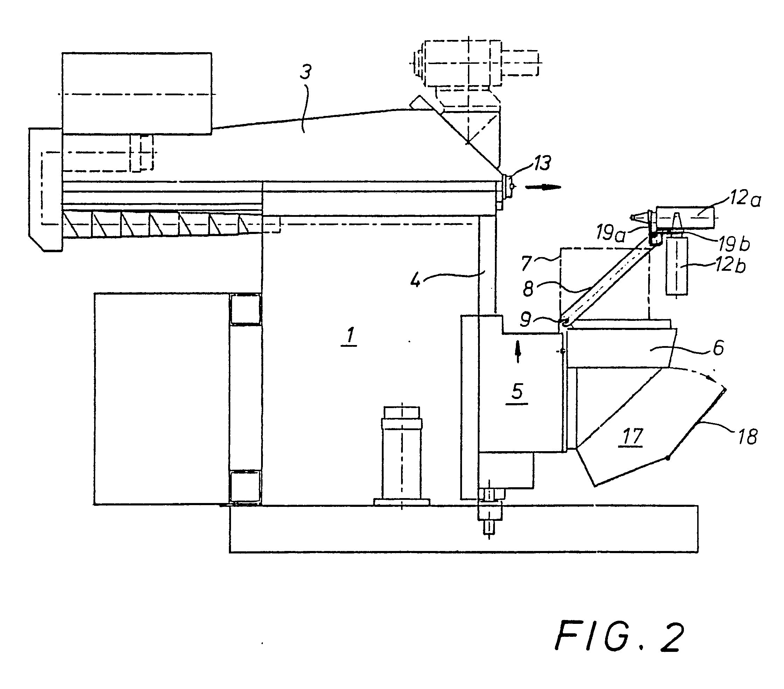

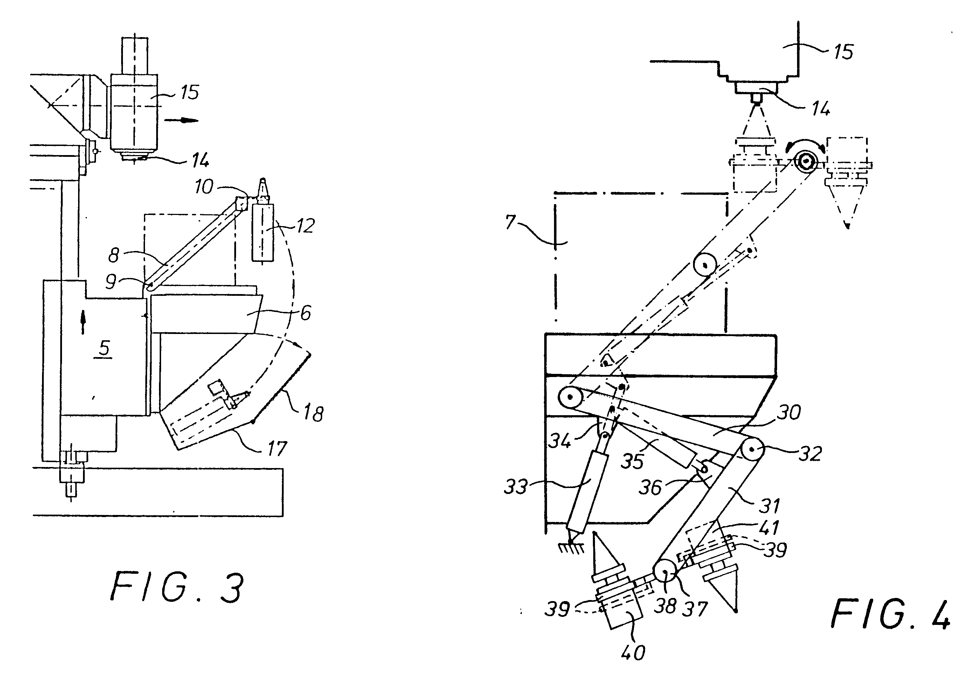

Wie aus Fig. 1 bis 3 ersichtlich, ist im Bereich der oberen maschinenseitigen Kante des Werkstücktisches 6 ein Schwenkarm 8 um eine horizontale Achse 9 seitlich neben dem Werkstücktisch schwenkbar angelenkt, an dessen freiem Ende ein Werkstückträger 10 um eine Achse 11 verdrehbar befestigt ist. An diesem Werkzeugträger 10 sind eine Reihe von einseitig offenen Werkzeugaufnahmen 19 einzeln schwenkbar angeordnet, die das selbsttätige Einsetzen der Werkzeuge 12 in die horizontale Spindel 13 bzw. die vertikale Spindel 14 des drehbar an einer 45°-Fläche des Spindelstockes 3 montierten Vertikalkopfes 15 ermöglichen (vgl. Fig. 2, 3). Ein Antrieb 16, der - wie in Fig. 1 dargestellt als Kolben-Zylinder-Einheit ausgebildet sein kann, ist am Werkstücktisch 6 gelenkig befestigt, wobei seine Kolbenstange am Schwenkarm 8 angreift. Unter dem auskragenden Werkstücktisch 6 befindet sich ein Kasten 17 mit einer stirnseitigen Klappe 18, in dem der Werkzeugträger 10 in der Ruheposition gegen Spänebefall und gegenüber der Spülflüssigkeit geschützt aufgenommen ist.

Für einen Wechsel des Werkzeuges der Horizontalspindel wird der Werkzeugträger 10 aus der in Fig. 1 dargestellten Lage in die Wechselposition gemäß Fig. 2 durch Betätigung des Antriebes 16 verschwenkt, wobei die Klappe 18 des Aufnahmekastens 17 aufklappt. Der Schwenkwinkel des Schwenkarms 8 zur Horizontalen beträgt dabei etwa 45°, wobei die Länge der Schwenkarme so gewählt ist, daß bei dieser Schwenkbewegung Kollisionen zwischen dem Werkzeugträger 10 und den Werkzeugen 12 einerseits sowie dem Werkstücktisch 6 bzw. einem im Arbeitsbereich 7 aufgespannten Werkstück vermieden werden. Bei der dargestellten Anlenkung der Schwenkarme 8 an der oberen maschinenseitigen Tischkante ist somit die Schwenkarmlänge größer als die Tiefe des Werkstücktisches 6 und die Diagonale des Bereichs 7 Durch translatorisches Verfahren des Tisches 6 senkrecht zur Zeichenebene und durch eine Vertikalbewegung der Konsole 5 an den Führungen 4 wird der aufgeschwenkte Werkzeugträger 10 so positioniert, daß eine bestimmte leere Werkzeugaufnahme 19 zur Horizontalspindel 13 ausgerichtet ist. Diese leere Werkzeugaufnahme 19a wird um die Achse 11 verschwenkt, so daß ihre Mittelachse mit der Achse der Horizontalspindel fluchtet. Durch eine Vorschubbewegung des Spindelstocks 3 mit der Horizontalspindel 15 erfolgt dann die Übergabe des verbrauchten Werkzeugs 12a an die Werkzeugaufnahme 19a. Nach Freigabe des Werkzeugs 12b durch Zurückfahren des Spindelstocks 3 schwenkt die Werkzeugaufnahme 19a zurück, so daß sich das verbrauchte Werkzeug 12a in der vertikalen Lage befindet. Zum Einsetzen eines neuen Werkzeugs 12b wiederholt sich dieser Vorgang, d. h. die Werkzeugaufnahme 19b wird durch Verfahren des Werkstücktisches 6 mit dem aufgeschwenkten Werkzeugträger 10 zur Horizontalspindel 13 ausgerichtet und durch eine Schwenkbewegung der Werkzeugaufnahme 19b um die Achse 11 wird das neue Werkzeug 12b aus seiner vertikalen Lage in die Horizontale in Flucht zur Spindelachse gebracht. Durch eine neue Vorschubbewegung des Spindelstockes 3 erfolgt die Übergabe des neuen Werkzeugs 12b von der Werkzeugaufnahme 19b an die Horizontalspindel 13. Nach diesem Wechselvorgang erfolgt ein Zurückschwenken des Werkzeugträgers 10 mittels der Schwenkarme 8 in die Ruhestellung im Kasten 17.

In Fig. 3 ist das Wechseln des Werkzeuges einer Vertikalspindel dargestellt. Die einzelnen Bewegungsvorgänge vollziehen sich wie beim Werkzeugwechsel gemäß Fig. 2, wobei die Ausrichtung des Werkzeuges 12 durch eine entsprechende Verdrehbewegung des Werkzeugträgers 10 gegenüber dem Ende der Schwenkarme 8 so erfolgt, daß das zu wechselnde Werkzeug vertikal ausgerichtet ist und seine Mittelachse mit der Längsachse des vertikalen Fräskopfes 15 fluchtet. Die Bewegung zum Aus- und Einkuppeln des verbrauchten Werkzeuges und des neuen Werkzeuges in die Vertikalspindel wird bei dieser Ausführung nicht vom Spindelkopf 15, sondern vielmehr durch eine entsprechende Vertikalbewegung der Konsole 5 vorgenommen. Bei ausreichend großem Spindelvorschub ist es jedoch auch möglich, diese Einkuppelbewegung durch entsprechendes Ausfahren und Zurückfahren der Vertikalspindel 14 im Spindelkopf 15 vorzunehmen.

Bei dem in Fig. 4 dargestellten Werkzeugmagazin bestehen die beiden seitlich am Werkstücktisch angelenkten Schwenkarme aus je zwei Hebeln 30, 31, die über ein mittleres Gelenk 32 miteinander verbunden sind. Ein Linearantrieb 33, z. B. ein Zylinder, greift an einer am unteren Hebel 30 befestigten Konsole 34 an und schwenkt diesen Hebel 30 aus der in Vollinien dargestellten unteren Lage in die strichpunktierte Wechselposition. Ein weiterer Linearantrieb 35 ist am unteren Hebel 30 angelenkt und greift mit seiner Kolbenstange an einer seitlich vorstehend am oberen Hebel 31 befestigten Konsole 36 an. Am freien Ende dieses oberen Hebels 31 ist ein Werkzeugträger 37 um seine Längsachse 38 um jeweils 180° verdrehbar gelagert. Der Werkzeugträger 37 dieser Magazin-Ausführung hat zwei Reihen von achssymmetrisch positionierten Werkzeugaufnahmen 39 und ist somit gegenüber dem Magazin nach Fig. 1 - 3 für die doppelte Anzahl an Werkzeugen 40, 41 ausgelegt. Wie dargestellt, werden mit diesem Magazin nur die Werkzeuge der Vertikalspindel 14 gewechselt, was eine wesentliche konstruktive Vereinfachung des Wechselmechanismus ergibt. Die Praxis hat nämlich gezeigt, daß die Werkzeuge der Vertikalspindel 14 erheblich häufiger gewechselt werden müssen als die der Horizontalspindel 13. Für einen automatischen Bearbeitungsablauf ist es daher häufig vorteilhafter, nur die Werkzeuge der Vertikalspindel programmgesteuert zu wechseln, und zwar mit einer verdoppelten Speicherkapazität des Magazins. Da der Vertikalkopf 15 in der Regel schmaler als der Frontteil des die Horizontalspindel 13 aufnehmenden Spindelstockes 3 ist, können die Werkzeugaufnahmen 39 relativ dicht nebeneinander am Werkzeugträger 37 angeordnet werden, ohne daß der Vertikalkopf 15 beim Wechselvorgang mit in den benachbarten Werkzeugaufnahmen der gleichen Reihe gehalterten Werkzeugen kollidiert. Bei einer gleich dichten Anordnung der Werkzeugaufnahmen auch für die Horizontalspindel müßten die jeweils zu wechselnden Werkzeuge incl. ihrer Werkzeugaufnahmen einzeln und gesondert in eine Wechselposition bewegt werden, um Kollisionen des breiteren Spindelstockes mit benachbarten Werkzeugen im Magazin zu verhindern. Diese Einzelbewegungen der Werkzeugaufnahmen erfordern jedoch eine relativ komplizierte Antriebsmechanik. Für eine richtige Positionierung der am 180° verdrehbaren Werkzeugträger befestigten Werkzeugaufnahmen kann der Werkzeugträger auch ein abgewinkeltes Profilteil sein, wie dies für den in der unteren eingeschwenkten Ruhelage befindlichen Werkzeugträger gestrichelt dargestellt ist.

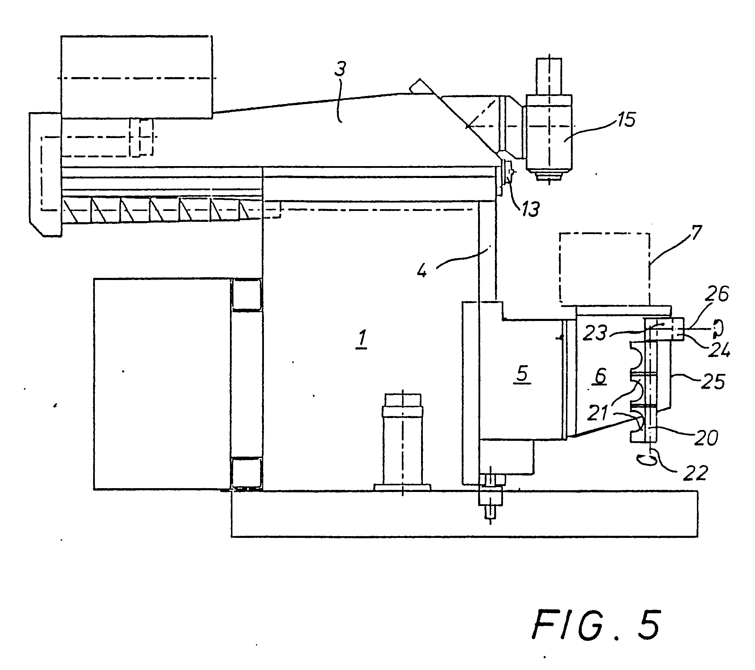

Bei der Ausführung nach Fig. 5 sind an einem Werkzeugträger 20 in einer Reihe angeordnete Werkzeugaufnahmen 21 um eine in seiner Längsrichtung verlaufende Achse 22 einzeln verdrehbar. Der Werkzeug träger 20 ist am abgewinkelten Endstück 23 eines Schwenkarms 24 befestigt, der mit seinem freien Ende an der vorderen Stirnwand 25 des Werkstücktisches 6 um eine horizontale Achse 26 verschwenkbar angelenkt ist. Durch einen nicht dargestellten Antrieb, z. B. eine zylinder-Kolben-Einheit gemäß Fig. 1, kann zum Wechsel eines Werkzeuges dieser Schwenkarm 24 in eine vertikale Lage um die Achse 26 verschwenkt werden, so daß dann der Werkzeugträger 20 mit der Reihe an Werkzeugaufnahmen 21 bzw. darin angeordneten Werkzeugen 12 sich horizontal vor dem Spindelstock erstreckt. Durch geeignete Fahrbewegungen der Konsole 5, des Werkstücktisches 6 und des Spindelstockes 3 bzw. der Spindeln 13, 14 und Verdrehbewegungen der jeweiligen Werkzeugaufnahmen 21 kann dann das jeweils verbrauchte Werkzeug aus der horizontalen oder der vertikalen Spindel ausgebaut und gegen ein neues Werkzeug ersetzt werden.

Die Erfindung ist nicht auf die dargestellten Ausführungsbeispiele beschränkt. So kann beispielsweise der Schwenkarm aus zwei oder mehreren teleskopartig ineinander greifenden Teilen bestehen und dadurch eine sich ändernde Länge haben, wodurch die Positioniermöglichkeiten in der Ruhestellung ebenso wie in der Wechselstellung erweitert werden können. Um schließlich betriebssichere Werkzeugwechsel-Vorgänge zu gewährleisten, sind Verriegelungs- oder Klemmeinrichtungen vorgesehen, die z. B. auf die Schwenkarme einwirken und den Werkzeugträger in seiner Ruheposition sowie insbesondere in der aufgeschwenkten Wechselstellung fixieren.

## Patentansprüche

1. Werkzeugmaschine, insbesondere für Fräs- und Bohrarbeiten,
- mit einem Spindelstock und einem in mehreren Achsen motorisch verfahrbaren Werkstücktisch sowie

- mit einem Werkzeugmagazin, dessen langgestreckter gerader Werkzeugträger eine Reihe von Werkzeugaufnahmen aufweist und an mindestens einem am Werkstücktisch befestigten Schwenkarm angeordnet ist,
<u>dadurch gekennzeichnet,</u>
daß der Schwenkarm (8; 24; 30, 31) um eine horizontale Achse (9; 26) schwenkbar an einer Wand des Werkstücktisches (6) angelenkt ist und daß der Werkzeugträger (10, 20) sich senkrecht zur Längsachse des Schwenkarms (8; 24; 30, 31) erstreckt und an dessen freiem Ende befestigt ist.

2. Werkzeugmaschine nach Anspruch 1,
<u>dadurch gekennzeichnet,</u>
daß der Werkzeugträger (10) mit beiden Enden an je einem Schwenkarm (8) befestigt ist, die an den beiden Seitenwänden des Werkstücktisches (6) um eine gemeinsame horizontale Achse (9) schwenkbar angelenkt sind.

3. Werkzeugmaschine nach Anspruch 1 oder 2,
<u>dadurch gekennzeichnet,</u>
daß der Werkzeugträger (10) in seiner Ruheposition in einen unter der vorderen Stirnwand des Werkstücktisches (6) angeordneten verschließbaren Kasten (17) geschwenkt ist.

4. Werkzeugmaschine nach einem der Ans-prüche 1 bis 3,
<u>dadurch gekennzeichnet,</u>
daß der Werkzeugträger (10) um eine Längsachse (11) verdrehbar an den Enden der Schwenkarme (8) befestigt ist.

5. Werkzeugmaschine nach einem der Ans-prüche 1 bis 4,
<u>dadurch gekennzeichnet,</u>
daß der (die) Schwenkarm(e) (8) im Bereich der oberen ständerseitigen Tischkante am Werkstücktisch (6) angelenkt ist (sind).

6. Werkzeugmaschine nach einem der Ans-prüche 1 bis 5,
<u>dadurch gekennzeichnet,</u>
daß der Schwenkarm an der vorderen Stirnseite des Werkstücktisches (6) um eine horizontale Achse (26) schwenkbar angelenkt ist.

7. Werkzeugmaschine nach einem der Ans-prüche 1 bis 6,
<u>dadurch gekennzeichnet,</u>
daß der (die) Schwenkarm(e) (8, 24) teleskopartig ausfahrbar ausgebildet ist (sind).

8. Werkzeugmaschine nach einem der Ans-prüche 1 bis 7,
<u>dadurch gekennzeichnet,</u>
daß der (die) Schwenkarm(e) (8; 24; 30, 31) in der Ruheposition und in der Wechsellage verriegelbar ist (sind).

9. Werkzeugmaschine nach einem der Ans-prüche 1 bis 8,
<u>dadurch gekennzeichnet,</u>
daß die Werkzeugaufnahmen (19) am Werkzeugträger (10) um seine Längsachse (11) einzeln schwenkbar angeordnet sind.

10. Werkzeugmaschine nach einem der Ans-prüche 1 bis 9,
<u>dadurch gekennzeichnet,</u>
daß jeder Schwenkarm (8) aus einem Gelenkhebelsystem mit Antriebsorganen gebildet ist.

11. Werkzeugmaschine nach Anspruch 10,
<u>dadurch gekennzeichnet,</u>
daß an den gegenüberliegenden Längsseiten des Werkzeugträgers (10) je eine Reihe von Werkzeugaufnahmen (19) um 180° gegeneinander verdreht angeordnet ist.

**Claims**

1. A machine tool, more particularly for cutting and drilling,
comprising a headstock and a work table mowable by motor means along a number of axes, and
having a tool magazine whose elongate straight tool carrier has a number of tool mountings and is disposed on at least one pivoted arm secured to the work table,
<u>characterised in that,</u>
the pivoted arm (8; 24; 30, 31) is so disposed on a wall of the work table (6) as to be pivotable around a horizontal axis (9; 26), and
the tool carrier (10, 20) extends perpendicularly to the longitudinal axis of the pivoted arm (8; 24; 30, 31) and is secured to the free end thereof.

2. A machine tool according to claim 1, characterised in that the tool carrier (10) is secured at each of its two ends to a pivoted arm (8), the arms (8) being so secured to the two work table side walls as to be pivotable around a common horizontal axis (9).

3. A machine tool according to claims 1 or 2, characterised in that when in its normal position the tool carrier (10) is pivoted into a closable box (17) disposed below the front end wall of the work table (6).

4. A machine tool according to any of claims 1 - 3, characterised in that the tool carrier (10) is so secured to the ends of the pivoted arms (8) as to be rotatable around a longitudinal axis (11).

5. A machine tool according to any of claims 1 - 4, characterised in that the or each pivoted arm (8) is pivotally connected to the work table (6) near the top table edge near the column.

6. A machine tool according to any of claims 1 - 5, characterised in that the pivoted arm is so disposed on the front end face of the work table (6) as to be pivotable around a horizontal axis (26).

7. A machine tool according to any of claims 1 - 6, characterised in that the or each pivoted arm (8, 24) is telescopically extensible.

8. A machine tool according to any of claims 1 - 7, characterised in that the or each pivoted arm (8; 24; 30, 31) is lockable in the normal position and in the change position.

9. A machine tool according to any of claims 1 - 8, characterised in that the tool mountings (19) are so disposed on the tool carrier (10) as to be individually pivotable around the longitudinal axis (11) thereof.

10. A machine tool according to any of claims 1 - 9, characterised in that each pivoted arm is embodied by a link lever system having drive elements.

11. A machine tool according to claim 10, characterised in that one row of tool mountings (19) is disposed on each of the opposite long sides of the tool carrier (10) at a 180° offset from one another.

## Revendications

1. Machine-outil, notamment pour travaux de fraisage ou de perçage, comprenant
- une poupée porte-broche et une table porte-pièce qui peut se déplacer selon plusieurs axes sous l'action d'un moteur;
- un magasin d'outils dont le porte-outils rectiligne, de forme allongée, présente une rangée de logements d'outils et est monté sur au moins un bras oscillant fixé à la table porte-pièce;
caractérisée
en ce que le bras oscillant (8; 24; 30, 31) est articulé à une paroi de la table porte-pièce (6) de façon à pouvoir osciller autour d'un axe horizontal (9; 26) et
en ce que le porte-outils (10, 20) s'étend perpendiculairement à l'axe longitudinal du bras oscillant (8; 24; 30, 31) et est fixé à l'extrémité libre de ce bras.

2. Machine-outil selon la revendication 1,
caractérisée
en ce que le porte-outils (10) est fixé par ses deux extrémités respectivement à deux bras oscillants (8) qui sont articulés aux deux parois latérales de la table porte-pièce (6) pour pouvoir osciller autour d'un axe horizontal commun (9).

3. Machine-outil selon la revendication 1 ou 2,
caractérisée
en ce que, dans sa position de repos, le porte-outils (10) est basculé dans un caisson (17) disposé au-dessous de la paroi frontale avant de la table porte-pièce (6) et pouvant être fermé.

4. Machine-outil selon une des revendications 1 à 3,
caractérisée
en ce que le porte-outil (10) est fixé aux deux extrémités des bras oscillants (8) de façon à pouvoir tourner autour d'un axe longitudinal (11).

5. Machine-outil selon une des revendications 1 à 4,
caractérisée
en ce que le ou les bras oscillant(s) (8) est ou sont articulé(s) sur la table porte-pièce (6) dans la région du bord supérieur côté bâti de cette table.

6. Machine-outil selon une des revendications 1 à 5,
caractérisée
en ce que le bras oscillant est articulé au côté frontal avant de la table porte-pièce (6) pour pouvoir osciller autour d'un axe horizontal (28).

7. Machine-outil selon une des revendications 1 à 6,
caractérisée

en ce que le ou les bras oscillant(s) (8, 24) est ou sont constitué(s) sous une forme extensible télescopique.

8. Machine-outil selon une des revendications 1 à 7,
caractérisée
en ce que le ou les bras oscillant(s, (8; 24; 30, 31) peut ou peuvent être verrouillé(s) dans la position de repos et dans la position de changement d'outil.

9. Machine-outil selon une des revendications 1 à 8,
caractérisée
en ce que les logements d'outils (19) prévus sur le porte-outils (10) sont agencés de façon à pouvoir osciller individuellement autour d'un axe longitudinal (11).

10. Machine-outil selon une des revendications 1 à 9,
caractérisée
en ce que chaque bras oscillant (8) est formé l'un système de leviers articulés équipé de dispositifs moteurs.

11. Machine-outil selon la revendication 10,
caractérisée
en ce que le long des deux côtés longitudinaux opposés du porte-outils (10) sont agencées deux rangées le logements d'outils (19), qui sont décalées de 180° l'une par rapport à l'autre.

FIG. 1

FIG. 2

FIG. 4

FIG. 3

FIG. 5